# EUROPEAN PATENT APPLICATION

(11) **EP 4 328 841 A1**
(43) Date of publication of application: **28.02.2024**
(21) Application number: 22799039.7
(22) Date of filing: 25.04.2022
(51) Int. Cl.: G06Q 40/00, G06Q 50/14, G06Q 50/26, G07C 9/00, G06Q 20/12

(54) **SYSTEM, SERVER, AND METHOD FOR PROVIDING TAX REFUND SERVICE FOR ONLINE PURCHASED PRODUCT**

(30) Priority: 03.05.2021 KR 20210057395
(71) Applicant: The Service Platform Co., Ltd., Seoul 02792 (KR)
(72) Inventor: KIM, Yongwoon, Seoul 06657 (KR); PARK, Jong Hyuck, Seoul 02723 (KR)
(74) Representative: Kurig, Thomas
(86) International application number: PCT/KR2022/005885
(87) International publication number: WO 2022/234996

(57) **Abstract**

The present invention relates to a server for providing a tax refund service for an online purchased product, the server comprising: a communication unit for communicating with a user terminal and an external payment server; and a processor that, when a purchase of a product in an online shopping mall associated with the tax refund service is requested from the user terminal, advances payment of the product in association with the external payment server through the communication unit, when the payment is completed, provides, to the user terminal, location information on a product storage apparatus where a paid product is to be delivered and stored, when passport information received from the product storage apparatus through the communication unit matches pre-stored passport information, controls the product storage apparatus to open a locked door such that the product can be collected, and pays, to an account of a user, tax refund money for the product collected by the user.

## Description

### [TECHNICAL FIELD]

Embodiments of the inventive concept described herein relate to a tax refund service, and more particularly, relate to a system, server, and method for providing a tax refund service for an online purchased product.

### [BACKGROUND ART]

A tax refund refers to a system of `tax refund for foreigners' that returns the equivalent amount of tax on products purchased during travel when tourists traveling abroad purchase items with a value-added tax (VAT) and then return to their home country without using the items.

In other words, the tax refund relates to a system in which items are tax-free at the time of export, unlike duty-free that is tax-free at the time of purchase. Accordingly, the tourists may purchase an item at the sales price and may get a tax refund after the purchase.

A tax refund service refers to a service that allows the tourists to refund the equivalent amount of tax through a refund window at an airport or port, or unmanned refund machine when the tourists leave the visited country, and is only available to those who leave the visited country within three months from the date of purchase.

Accordingly, most tourists go through several steps to get a tax refund for items purchased at overseas offline or online stores. In detail, the tourists fill out tax-free refund documents after arriving at an airport, at which the tourists are last going out, and then receive a customs confirmation stamp on their tax-free refund documents. After that, employees at a refund company counter at the airport check a refund form, a receipt, and an unused item. Afterward, the tourists may get a tax refund by putting the refund form in an envelope and putting it in a mailbox.

Accordingly, it takes a lot of time for a user, who arrives late at the airport, to perform a process of getting a tax refund within the bonded area. Accordingly, the user may forgo the tax refund.

Therefore, there needs to be an easy way for tourists to get a tax refund while traveling abroad.

### [DETAILED DESCRIPTION OF THE INVENTION]

### [TECHINICAL PROBLEM]

Embodiments of the inventive concept provide a service that allows tourists (including foreigners and overseas compatriots of the visited country) to make a payment by using their preferred currency or digital currency when they purchase a product through an online shopping mall before or after entering a country, and allows the tourists to receive the purchased product and to get a refund at the desired schedule and location after they enters the country.

Problems to be solved by the inventive concept are not limited to the problems mentioned above, and other problems not mentioned will be clearly understood by those skilled in the art from the following description.

### [TECHNICAL SOLUTION]

According to an embodiment, a server for providing a tax refund service for an online purchased product includes a communication unit that communicates with a user terminal and an external payment server, and a processor that makes a payment for the product in conjunction with the external payment server through the communication unit, when a purchase of a product in an online shopping mall linked to the tax refund service is requested from the user terminal, provides the user terminal with location information of a product storage apparatus where a paid product is to be delivered and stored when the payment is completed, allows the product storage apparatus to open a locked door such that the product is capable of being received when passport information received from the product storage apparatus through the communication unit matches pre-stored passport information, and pays, to an account of a user, a tax refund amount for the product received by the user.

Moreover, the processor may provide the user terminal with a list of the plurality of product storage apparatuses when the product storage apparatus for storing the paid product includes a plurality of product storage apparatuses, and may control the user terminal such that the paid product is stored in a specific product storage apparatus selected from the list.

Here, the product storage apparatuses in the list may be determined based on a pickup schedule and a receivable place of the product set from the user terminal.

Furthermore, the processor may transmit, to the user terminal, a receipt acknowledgement message including exchange rate information on a day of pickup based on the pickup schedule, and may change the pickup schedule of the product when receiving a request for a receipt delay in response to the receipt acknowledgement message from the user terminal.

Also, the processor may transmit, to the user terminal, a receipt acknowledgement message based on the pickup schedule before a predetermined schedule, may receive a new pickup location from the user terminal when receiving a request for a pickup location change in response to the receipt acknowledgment message from the user terminal, and may generate and provide the list of the product storage apparatuses based on the new pickup location.

Besides, the processor may determine whether the user is eligible for a tax refund, based on passport information of the user in conjunction with an immigration control server and an inland tax management server, and may calculate the tax refund amount for the product when the user is eligible for the tax refund.

In addition, the processor may further provide authentication information to the user terminal, and may allow the product storage apparatus to open a locked door when passport information of the user matches the pre-stored passport information, and authentication information, which is received from the product storage apparatus through the communication unit, matches pre-stored authentication information.

Moreover, the processor may allow the product storage apparatus to open a locked door when the passport information of the user matches the pre-stored passport information, the authentication information matches the pre-stored authentication information, and biometric information of the user, which is received in real time from a biometric recognition module of the product storage apparatus through the communication unit, matches predetermined biometric information.

Furthermore, the processor may display, on the user terminal, delivery tracking information of the product and payment processing information of the tax refund amount in real time.

Here, the delivery tracking information may include date-specific location information about a delivery tracking process in which the product is moved to the product storage apparatus.

Here, the payment information may include at least one of the tax refund amount, a scheduled payment date, and a payment currency type.

According to an embodiment, in a computer program for executing a method for executing a tax refund service for an online purchased product, the computer program for executing the method may include making a payment for the product in conjunction with an external payment server when a purchase of a product in an online shopping mall linked to the tax refund service is requested from a user terminal, providing the user terminal with location information of a product storage apparatus where a paid product is to be delivered and stored when the payment is completed, allowing the product storage apparatus to open a locked door such that the product is capable of being received when passport information received from the product storage apparatus matches pre-stored passport information, and paying, to an account of a user, a tax refund amount for the product received by the user.

In addition, another method, another apparatus, and another system for implementing the inventive concept, and a computer-readable recording medium for recording a computer program for performing the method may be further provided.

### [ADVANTAGEOUS EFFECTS OF THE INVENTION]

According to an embodiment of the inventive concept, when tourists traveling abroad purchase products through an online shopping mall in the corresponding country before or during an overseas trip, the tourists may receive the products at their desired schedule and location during their trip and then may get a tax refund. Accordingly, the tourists may easily and conveniently get the tax refund at their desired schedule and location without going through complicated processes after the tourists arrive at the airport early.

Effects of the inventive concept are not limited to the effects mentioned above, and other effects not mentioned will be clearly understood by those skilled in the art from the following description.

### [DESCRIPTION OF THE DRAWINGS]

FIG. 1 is a diagram schematically illustrating a system for providing a tax refund service for an online purchased product, according to an embodiment of the inventive concept.
FIG. 2 is a diagram for describing a system for providing a tax refund service for an online purchased product, according to an embodiment of the inventive concept.
FIG. 3 is a block diagram schematically illustrating a server for providing a tax refund service for an online purchased product, according to an embodiment of the inventive concept.
FIG. 4 is a block diagram schematically illustrating a user terminal that receives a tax refund service for an online purchased product, according to an embodiment of the inventive concept.
FIG. 5 is a block diagram schematically illustrating a product storage apparatus for providing a tax refund service for an online purchased product, according to an embodiment of the inventive concept.
FIG. 6 is a flowchart illustrating a process of providing a tax refund service for an online purchased product in a first processor of a server, according to an embodiment of the inventive concept.

### [BEST MODE]

The above and other aspects, features and advantages of the inventive concept will become apparent from embodiments to be described in detail in conjunction with the accompanying drawings. The inventive concept, however, may be embodied in various different forms, and should not be construed as being limited only to the illustrated embodiments. Rather, these embodiments are provided as examples so that the inventive concept will be thorough and complete, and will fully convey the scope of the inventive concept to those skilled in the art. The inventive concept may be defined by the scope of the claims.

The terms used herein are provided to describe embodiments, not intended to limit the inventive concept. In the specification, the singular forms include plural forms unless particularly mentioned. The terms "comprises" and/or "comprising" used herein do not exclude the presence or addition of one or more other components, in addition to the aforementioned components. The same reference numerals denote the same components throughout the specification. As used herein, the term "and/or" includes each of the associated components and all combinations of one or more of the associated components. It will be understood that, although the terms "first", "second", etc., may be used herein to describe various components, these components should not be limited by these terms. These terms are only used to distinguish one component from another component. Thus, a first component that is discussed below could be termed a second component without departing from the technical idea of the inventive concept.

Unless otherwise defined, all terms (including technical and scientific terms) used herein have the same meaning as commonly understood by those skilled in the art to which the inventive concept pertains. It will be further understood that terms, such as those defined in commonly used dictionaries, should be interpreted as having a meaning that is consistent with their meaning in the context of the specification and relevant art and should not be interpreted in an idealized or overly formal sense unless expressly so defined herein.

Hereinafter, embodiments of the inventive concept will be described in detail with reference to accompanying drawings.

Prior to a description, the meaning of terms used in the present specification will be described briefly. However, because the description of terms is used to help the understanding of this specification, it should be noted that if the inventive concept is not explicitly described as a limiting matter, it is not used in the sense of limiting the technical idea of the inventive concept.

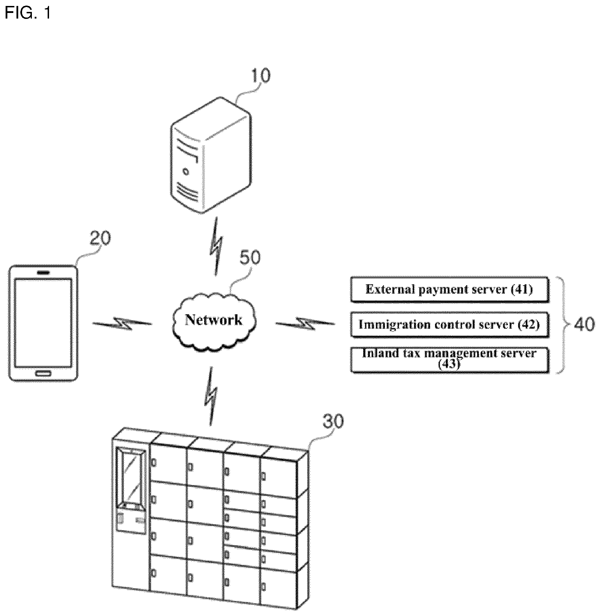

FIG. 1 is a diagram schematically illustrating a system for providing a tax refund service for an online purchased product, according to an embodiment of the inventive concept.

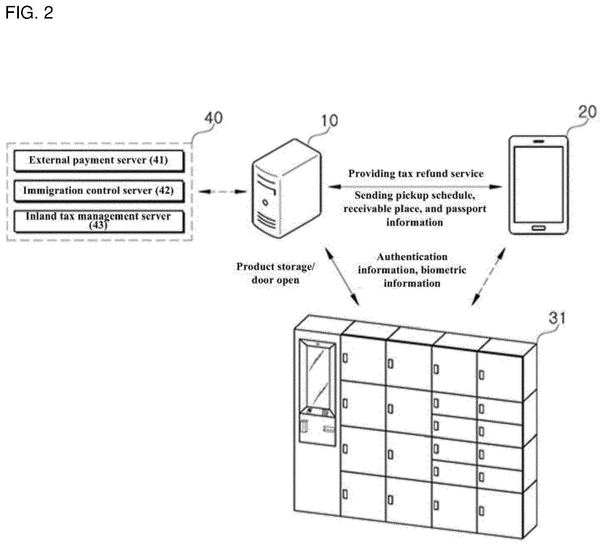

FIG. 2 is a diagram for describing the system for providing a tax refund service for an online purchased product, according to an embodiment of the inventive concept.

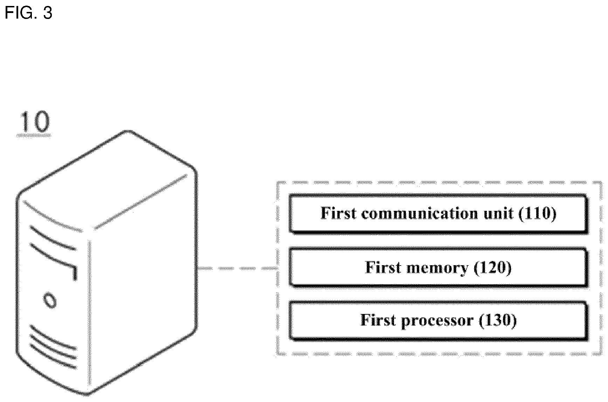

FIG. 3 is a block diagram schematically illustrating a server 10 for providing a tax refund service for an online purchased product, according to an embodiment of the inventive concept.

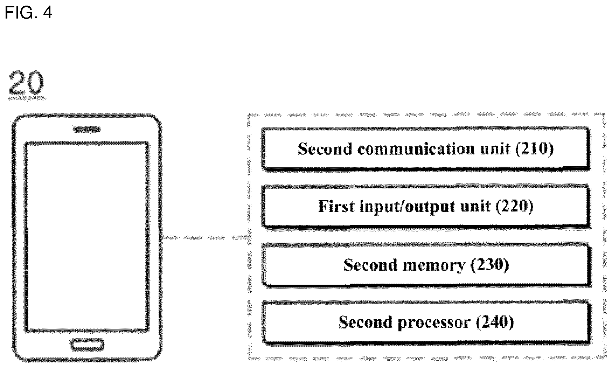

FIG. 4 is a block diagram schematically illustrating a user terminal 20 that receives a tax refund service for an online purchased product, according to an embodiment of the inventive concept.

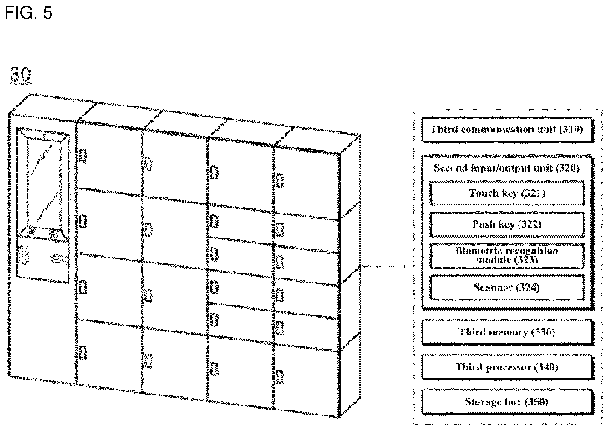

FIG. 5 is a block diagram schematically illustrating a product storage apparatus 30 for providing a tax refund service for an online purchased product, according to an embodiment of the inventive concept.

Hereinafter, the system for providing a tax refund service for an online purchased product according to an embodiment of the inventive concept will be described with reference to FIGS. 1 to 5.

When tourists traveling abroad purchase products through an online shopping mall in the corresponding country before or during an overseas trip, the tourists may receive the products at their desired schedule and location during their trip and then may get a tax refund through the system. Accordingly, the tourists may easily and conveniently get the tax refund at their desired schedule and location through the system without going through complicated processes after the tourists arrive at the airport early.

As described above, the tax refund service according to an embodiment of the inventive concept may be built and provided in a form of an application by a provider of the tax refund service, or may be built and provided based on a web. At this time, the web may have the form of one of a web browser, a web page, or a website for providing the tax refund service. The following description according to an embodiment of the inventive concept assumes that the web has the form of a web browser, but the form of the web according to an embodiment of the inventive concept is not limited thereto.

The system may include the server 10 that provides a tax refund service for an online purchased product, the user terminal 20 that receives the tax refund service, the product storage apparatus 30 in which the online purchased product is delivered and stored, an external server 40, and a communication network 50. Here, the external server 40 may include an external payment server 41, an immigration control server 42, and an inland tax management server 43.

Here, the system may include fewer or more components than the components illustrated in FIGS. 1 and 2.

When a purchase of a product in an online shopping mall is requested from the user terminal 20, the server 10 may make a payment for the product in conjunction with the external payment server 41.

Moreover, when the payment is completely made, the server 10 may provide the user terminal 20 with location information of the product storage apparatus 30 where the paid product is to be delivered and stored.

Afterward, when passport information, which is received from the product storage apparatus 30 after being entered by a user, matches pre-stored passport information, the server 10 may allow the product storage apparatus 30 to open the locked door such that the product is capable of being received.

At this time, the server 10 may pay the tax refund amount for the product, which is received by the user, to the user's account.

The server 10 may include a first communication unit 110, a first memory 120, and a first processor 130. Herein, the server 10 may include fewer or more components than the components illustrated in FIG. 3.

The first communication unit 110 may include one or more modules that enable wireless communication between the server 10 and a wireless communication system, between the server 10 and the user terminal 20, between the server 10 and the product storage apparatus 30, between the server 10 and the external server 40, or between the server 10 and a delivery person terminal (not shown).

Furthermore, the first communication unit 110 may include one or more modules connecting the server 10 to one or more networks.

The first memory 120 may store data for supporting various functions of the server 10. The first memory 120 may store a plurality of application programs (or applications) running in the server 10, data for an operation of the server 10, and instructions. At least part of the application programs may be present for basic functions of the server 10. In the meantime, the application program may be stored in the first memory 120, may be installed in the server 10, and may be driven by the first processor 130 so as to perform an operation (or function) of the server 10.

In addition to an operation associated with the application program, the first processor 130 may generally control overall operations of the server 10. The first processor 130 may provide or process appropriate information or functions to a user, by processing signals, data, or information, which is input or output through the above-described components, or launching the application program stored in the first memory 120.

Moreover, to launch the application program stored in the first memory 120, the first processor 130 may control all of the components shown in FIG. 3 or may selectively control at least one component shown in FIG. 3. Furthermore, the first processor 130 may combine and operate at least two or more of the components included in the server 10 to launch the application program.

The first processor 130 may provide the user terminal 20 with an application for a tax refund service of an online purchased product such that the application is installed in the user terminal 20.

In detail, the first processor 130 may provide the application in a downloadable form to a website linked to the server 10 such that the user terminal 20 is capable of downloading the application through the website and launching the application.

Alternatively, the first processor 130 may provide the application to a download server such that the user terminal 20 is capable of downloading the application through the download server and launching the application.

The first processor 130 may make a request for a sign-up process and a login process after sign-up to the user terminal 20 through the application installed in the user terminal 20.

Alternatively, the first processor 130 may make a request for the sign-up process and the login process after sign-up to the user terminal 20 through a web browser installed in advance in the user terminal 20.

Here, the first processor 130 may cumulatively store information of a user's name, date of birth, mobile phone number, passport information, ID, and password, which are entered when the sign-up process and the login process after sign-up are performed through the application or the web browser installed in the user terminal 20, for each user in the first memory 120.

When a purchase of a product in an online shopping mall linked to the tax refund service is requested from the user terminal 20, the first processor 130 may make a payment for the product in conjunction with the external payment server 41 through the first communication unit 110. Here, the external payment server 41 may be at least one of a credit card server, a bank server, and a digital currency payment server.

Here, the online shopping mall may be a shopping mall, which is provided by the server 10 and which sells products online, or may be an existing shopping mall.

In more detail, the online shopping mall may be a shopping mall capable of being accessed by customers at any time by using various digital devices including mobile devices such as PCs and smart phones, by providing a product list such that a user is capable of selecting products online and providing a shopping cart function of recording a list of the selected products.

When the payment is completely made, the first processor 130 may provide the user terminal 20 with location information of the product storage apparatus 30 where the paid product is to be delivered and stored. Here, the location information may be information about a location of the product storage apparatus 30 on a map.

Hereinafter, when the first processor 130 transmits information to the user terminal 20, the first processor 130 may transmit the information through a push-type message in the case where an application for a tax refund service is installed in the user terminal 20, or may transmit the information through at least one of SMS, MMS, and e-mail in the case where the application for the tax refund service is not installed in the user terminal 20 and the tax refund service is provided through a web browser.

In detail, the first processor 130 may provide the user terminal 20 with the location information indicating the location of the product storage apparatus 30 in each predetermined area on the map.

For example, when a foreigner (including overseas compatriots of the visited country) completely makes a payment for a product at a domestic online shopping mall, the first processor 130 may provide the user terminal 20 with the location information indicating that a location of the product storage apparatus 30 where the paid product is to be delivered and stored is displayed in each area on the map of Korea.

Furthermore, the first processor 130 may receive, from the user terminal 20, information about a pickup schedule of the product and at least one area (hereinafter, referred to as a "receivable place"), in which pickup is possible, and which is included in the location information. When two or more product storage apparatuses 30 are present in the area, the first processor 130 may provide the user terminal 20 with a list of product storage apparatuses located in the area.

In other words, when two or more product storage apparatuses 30, in each of which the paid product is capable of being stored, are present, the first processor 130 may provide the user terminal 20 with a list of the two or more product storage apparatuses. Here, the product storage apparatuses in the list may be determined based on the pickup schedule and the receivable place of the product set from the user terminal 20.

In addition, the first processor 130 may provide the user terminal 20 with detailed information about the number of remaining storage boxes of each product storage apparatus corresponding to the list, and sizes of the remaining storage boxes.

Moreover, the first processor 130 may allow a specific product storage apparatus 31, which is selected from the list by the user terminal 20, to store the paid product.

In this case, the first processor 130 may transmit, to a delivery person terminal (not shown) of a delivery person responsible for delivering the product, delivery information about a detailed location (including a map) of the specific product storage apparatus 31 where the product is to be stored, a storage box location (a storage box number or information about the low and column of a storage box), and a pickup schedule.

The first processor 130 may transmit, to the user terminal 20, a receipt acknowledgement message including exchange rate information on the day of pickup based on the pickup schedule.

Accordingly, a user may decide whether to get a tax refund amount at the exchange rate on the day of receipt, based on the exchange rate information included in the receipt acknowledgement message, and thus the user may get the tax refund amount at a favorable exchange rate.

Afterward, when the first processor 130 receives a request for a receipt delay in response to the receipt acknowledgement message from the user terminal 20, the first processor 130 may change the pickup schedule of the product.

Before the predetermined schedule, the first processor 130 may transmit, to the user terminal 20, the receipt acknowledgement message based on the pickup schedule.

Afterward, when the first processor 130 is requested to change a pickup location in response to the receipt acknowledgment message by the user terminal 20, the first processor 130 may receive a new pickup location from the user terminal 20.

Furthermore, the first processor 130 may generate and provide the list of the product storage apparatuses based on the new pickup location.

In this case, under control of the first processor 130, the paid product may be stored in a specific product storage apparatus 31 selected from the list generated based on the new pickup location received by the user terminal 20.

The first processor 130 may determine whether a user is eligible for a tax refund, based on the user's passport information in conjunction with the immigration control server 42 and the inland tax management server 43. When the user is eligible for a tax refund, the first processor 130 may calculate the tax refund amount for the product.

Here, the immigration control server 42 may be a server, which is operated by Korea Customs Service and Ministry of Justice and which manages departure and entry information of visiting foreigners and product export information

Besides, the inland tax management server 43 may be a server, which is operated by National Tax Service and which stores passport information and refund histories of foreigners, who have visited the corresponding country, and determines whether a refund service is available, based on the inquired passport information.

When passport information, which is received from the product storage apparatus 30 through the first communication unit 110 after being entered by a user, matches pre-stored passport information, the first processor 130 may allow the specific product storage apparatus 31 to open the locked door such that the product is capable of being received.

For example, the first processor 130 may further provide authentication information to the user terminal 20.

Afterward, when the user's passport information matches the pre-stored passport information, and the authentication information, which is entered by the user and which is received from the product storage apparatus 30 through the first communication unit 110, matches predetermined authentication information, the first processor 130 may allow the product storage apparatus 30 to open the locked door.

For another example, when the user's passport information matches the pre-stored passport information, the authentication information entered by the user matches the predetermined authentication information, and the user's biometric information received in real time from a biometric recognition module 323 of the specific product storage apparatus 31 through the first communication unit 110 matches predetermined biometric information, the first processor 130 may allow the specific product storage apparatus 31 to open the locked door.

In detail, the first processor 130 may make a request for the user's biometric information to the specific product storage apparatus 31. Accordingly, at the request of the first processor 130 of the server 10, the specific product storage apparatus 31 may obtain biometric information such as a fingerprint, an iris, and a face through the biometric recognition module 323.

Accordingly, when all of the passport information, the authentication information, and the biometric information are matched, the first processor 130 may allow the specific product storage apparatus 31 to open the locked door, thereby increasing security and safely receiving the product.

The first processor 130 may pay the tax refund amount for the product, which is received by the user, to the user's account.

Here, the user's account may be an account, which is selected by the user, from among a payment account of a credit card used when the user makes a payment for the product at the online shopping mall, a separate bank account established at the online shopping mall, and an account (e.g., blockchain-based virtual currencies such as Alipay, WeChat pay, Grab, and Bitcoin) of a digital currency used for making a payment at the online shopping mall.

The first processor 130 may display, on the user terminal, delivery tracking information about the product and payment processing information of the tax refund amount in real time.

Here, the delivery tracking information may include date-specific location information about a delivery tracking process in which the product is moved to the product storage apparatus.

Moreover, the payment information may include at least one of a tax refund amount, a scheduled payment date, and a payment currency type. Here, the payment currency type may be a native currency used when the user makes a payment, or a foreign currency that the user wants additionally.

Accordingly, the user may purchase a product at an online shopping mall before or during entry into the visited country, may receive the purchased product at the desired pickup schedule and receivable location, and may even get a tax refund service accordingly, thereby increasing convenience and decreasing time wasted at the airport.

In other words, because the user purchases a product at an online shopping mall, the user may easily and conveniently purchase the product through an online shopping mall before or during a visit without visiting a store in the country to be visited. Accordingly, the user may conveniently employ the online shopping mall.

Furthermore, because the user receives the product offline at the desired pickup schedule and receivable place, the user may receive the product at any time before leaving the visited country, thereby reducing the burden of storing the product while the user stays in the visited country.

The first processor 130 may receive storage status information about the locations, number, and sizes of storage boxes, in each of which the product is stored, from the product storage apparatus 30 through the first communication unit 110 in real time or at regular intervals.

Accordingly, the first processor 130 may manage a product, which is not exported even after the predetermined pickup schedule has passed, based on the storage status information of the product storage apparatus 30. In other words, the first processor 130 may transmit, to the user terminal 20, a notification message regarding a product that is not exported even after the predetermined pickup schedule has passed.

The user terminal 20 may download an application provided by the server 10 to receive the tax refund service.

In detail, the user terminal 20 may directly download the application provided by the server 10 through the server 10 and may launch the application, or may download the application from a download server (not shown) and launch the application. Here, when receiving an application download request from the user terminal 20, the download server (not shown) may provide the requested application to the user terminal 20.

Alternatively, the user terminal 20 may receive the tax refund service through a web browser installed in advance.

At the request of the server 10, the user terminal 20 may perform a sign-up process of signing up for the application and a login process after sign-up.

Alternatively, the user terminal 20 may perform the sign-up process and the login process after sign-up through the web browser installed in advance.

In detail, the user terminal 20 may authenticate a user by entering at least one piece of information among the user's name, date of birth, mobile phone number, and passport information for the sign-up process.

After performing the authentication, the user terminal 20 may generate login information including the user's ID and password for the login process. Here, the user terminal 20 may receive login information for the login process, or may receive biometric information (e.g., a fingerprint, an iris, or a face) matching the login information.

For example, the user terminal 20 may be connected to the server 10 over a network, such as a mobile phone, a smartphone, a personal digital assistant (PDA), a portable multimedia player (PMP), or a tablet PC. The user terminal 20 may include a camera and may be all types of handheld-based wireless communication device capable of input/output of various pieces of information through a screen.

Here, the user terminal 20 may include a second communication unit 210, a first input/output unit 220, a second memory 230, and a second processor 240. Here, the user terminal 20 may include fewer or more components than the components illustrated in FIG. 4.

The second communication unit 210 may include one or more modules that enable wireless communication between the user terminal 20 and a wireless communication system, between the user terminal 20 and the server 10, between the user terminal 20 and the product storage apparatus 30, between the user terminal 20 and the external server 40, or between the user terminal 20 and a delivery person terminal (not shown).

Furthermore, the second communication unit 210 may include one or more modules connecting the user terminal 20 to one or more networks.

The first input/output unit 220 may include a touch key, a push key, or the like to receive information from a user (including foreigners and overseas compatriots of the visited country), and may include a display module (not shown), an audio output module (not shown), a haptic module (not shown), and an optical output module (not shown), which are used to generate an output related to visual, auditory, or tactile sensation to the user.

Here, the display module may be implemented as a touch screen, which is formed in a layered structure with a touch sensor or which is integrated with the touch sensor. The touch screen may provide an input interface between the user terminal 20 and a user and may, at the same time, provide an output interface between the user terminal 20 and the user.

The second memory 230 may store data for supporting various functions of the user terminal 20. The second memory 230 may store a plurality of application programs (or applications) running in the user terminal 20, data for an operation of the user terminal 20, and instructions. At least part of the application programs may be downloaded from an external server (not illustrated) through wireless communication.

Moreover, at least part of the application programs may be present for basic functions of the user terminal 20. In the meantime, the application program may be stored in the second memory 230, may be installed in the user terminal 20, and may be driven by the second processor 240 so as to perform an operation (or function) of the user terminal 20.

The second memory 230 may store an application provided by the server 10. In detail, the second memory 230 may store application execution data for a tax refund service in the user terminal 20.

In addition to an operation associated with the application program, the second processor 240 may generally control overall operations of the user terminal 20. The second processor 240 may provide or process appropriate information or functions to a user, by processing a signal, data, information, or the like, which is input or output through the above-described components, or driving the application program stored in the second memory 230.

Besides, the second processor 240 may control at least part of the components described with reference to FIG. 3 to operate the application program stored in the second memory 230. Furthermore, the second processor 240 may combine and operate at least two or more of the components included in the user terminal 20 to operate the application program.

The product storage apparatus 30 may be an apparatus that is installed in each predetermined area of a country, which provides a tax refund service for an online purchased product, to store a product purchased by a user.

Here, the product storage apparatus 30 may include a third communication unit 310, a second input/output unit 320, a third memory 330, and a third processor 340. Herein, the product storage apparatus 30 may include fewer or more components than the components illustrated in FIG. 5.

The third communication unit 310 may include one or more modules that enable wireless communication between the product storage apparatus 30 and wireless communication system, between the product storage apparatus 30 and the server 10, between the product storage apparatus 30 and the user terminal 20, between the product storage apparatus 30 and the external server 40, or between the product storage apparatus 30 and a delivery person terminal (not shown).

Furthermore, the third communication unit 310 may include one or more modules connecting the product storage apparatus 30 to one or more networks.

The second input/output unit 320 may include a touch key 321, a push key 322 (or a mechanical key), a biometric recognition module 323 (e.g., an iris recognition camera, a fingerprint recognition module, a facial recognition camera, or the like), and a scanner 323 for recognizing passport information, which are used to receive information from a user (including foreigners and overseas compatriots of the visited country) or a delivery person.

Moreover, the second input/output unit 320 may include a display module (not shown), an audio output module (not shown), a haptic module (not shown), and an optical output module (not shown), which are used to generate an output related to visual, auditory, or tactile sensation to the user or the delivery person.

Here, the display module may be implemented as a touch screen, which is formed in a layered structure with a touch sensor or which is integrated with the touch sensor. The touch screen may provide an input interface between the product storage apparatus 30 and the user or the delivery person and may, at the same time, provide an output interface between the product storage apparatus 30 and the user or the delivery person.

The third memory 330 may store data for supporting various functions of the product storage apparatus 30. The third memory 330 may store a plurality of application programs (or applications) running in the product storage apparatus 30, data for an operation of the product storage apparatus 30, and instructions. At least part of the application programs may be downloaded from the server 10 or an external server (not shown) through wireless communication or may be provided in a form of software or firmware.

Besides, at least part of the application programs may be present for basic functions of the product storage apparatus 30. In the meantime, the application program may be stored in the third memory 330, may be installed in the product storage apparatus 30, and may be driven by the third processor 340 so as to perform an operation (or function) of the product storage apparatus 30.

In addition to an operation associated with the application program, the third processor 340 may generally control overall operations of the product storage apparatus 30. The third processor 340 may provide or process appropriate information or functions to the user or the delivery person, by processing a signal, data, information, or the like, which is input or output through the above-described components, or driving the application program stored in the third memory 330.

Besides, the third processor 340 may control at least part of the components described with reference to FIG. 4 to operate the application program stored in the third memory 330. Furthermore, the third processor 340 may combine and operate at least two or more of the components included in the product storage apparatus 30 to operate the application program.

When authentication for the user is completed under the control of the server 10, a locked door may be open under control of the third processor 340. Here, the authentication for a user may be performed by determining whether the user's passport information matches the pre-stored passport information, authentication information entered by the user matches the predetermined authentication information, and the user's biometric information matches predetermined biometric information.

At least one or more storage boxes 350 may be provided in each product storage apparatus 30. The storage box 350 may have a size capable of storing one or more products, each of which has a predetermined size. Accordingly, the user or the delivery person may select, in advance, a specific storage box, which has a size capable of storing the product purchased by the user, from among the at least one storage box 350 thus provided. Alternatively, the delivery person may select the specific storage box among the at least one or more storage boxes 350 on or before the day of pickup.

The communication network 50 may transmit or receive various pieces of information between the server 10, the user terminal 20, the product storage apparatus 30, the external server 40, and the delivery person terminal (not shown). Various types of communication networks may be used as the communication network 50. For example, wireless communication methods such as wireless LAN (WLAN), Wi-Fi, Wibro, Wimax, High Speed Downlink Packet Access (HSDPA), and the like or wired communication methods such as Ethernet, xDSL (ADSL or VDSL), Hybrid Fiber Coax (HFC), Fiber to the Curb (FTTC), Fiber to the Home (FTTH), and the like may be used as the communication network 50.

In the meantime, the communication network 50 is not limited to the communication method described above, and may include all types of communication methods widely known or to be developed in the future in addition to the above communication methods.

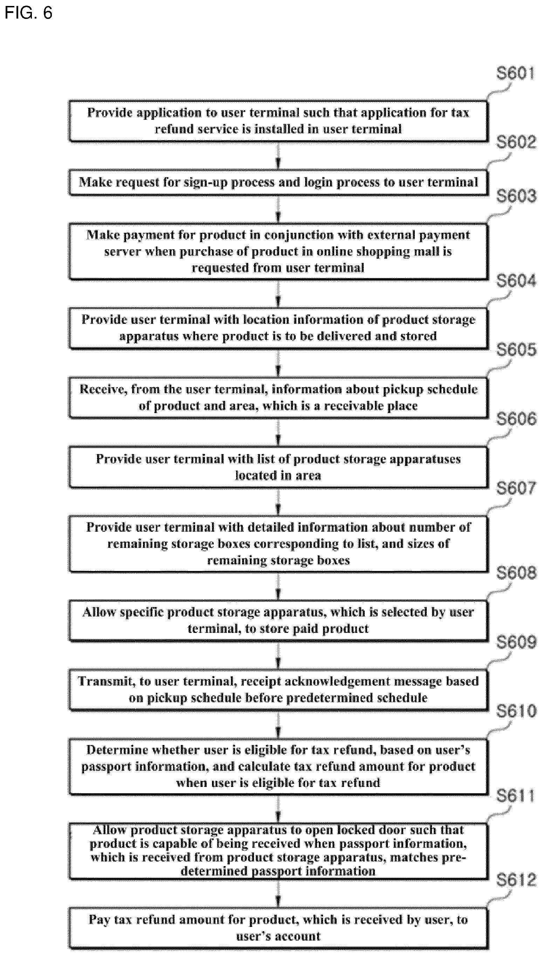

FIG. 6 is a flowchart illustrating a process of providing a tax refund service for an online purchased product in the first processor 130 of the server 10, according to an embodiment of the inventive concept. Here, an operation of the first processor 130 may be performed by the server 10.

The first processor 130 may provide an application to the user terminal 20 such that the application for a tax refund service of an online purchased product is installed in the user terminal 20 (S601).

In detail, the first processor 130 may provide the application in a downloadable form to a website linked to the server 10 such that the user terminal 20 is capable of downloading the application through the website and launching the application.

Alternatively, the first processor 130 may provide the application to a download server such that the user terminal 20 is capable of downloading the application through the download server and launching the application.

The first processor 130 may make a request for a sign-up process and a login process after sign-up to the user terminal 20 through the application installed in the user terminal 20 (S602).

In detail, the first processor 130 may cumulatively store information of a user's name, date of birth, mobile phone number, passport information, ID, and password, which are entered when the sign-up process and the login process after sign-up are performed through the application installed in the user terminal 20, for each user in the first memory 120.

When a purchase of a product in an online shopping mall is requested from the user terminal 20, the first processor 130 may make a payment for the product in conjunction with the external payment server 41 (S603).

In detail, when a purchase of a product in an online shopping mall linked to the application is requested from the user terminal 20 through the application, the first processor 130 may make a payment for the product in conjunction with the external payment server 41 through the first communication unit 110.

Here, the online shopping mall may be a shopping mall, which is provided by the server 10 and which sells products online, or may be an existing shopping mall.

When the payment is completely made, the first processor 130 may provide the user terminal 20 with location information of the product storage apparatus 30 where the paid product is to be delivered and stored, through the application (S604).

Here, the location information may be information about a location of the product storage apparatus 30 on a map.

In detail, the first processor 130 may provide the user terminal 20 with the location information indicating the location of the product storage apparatus 30 in each predetermined area on the map.

The first processor 130 may receive, from the user terminal 20, information about a pickup schedule of the product and an area, which is a receivable place (S605)

In particular, the first processor 130 may receive, from the user terminal 20, information about a pickup schedule of the product and at least one area, which is a receivable place and which is included in the location information.

The first processor 130 may provide the user terminal 20 with a list of product storage apparatuses located in the area (S606).

That is, when two or more product storage apparatuses 30 are present in the area, the first processor 130 may provide the user terminal 20 with a list of product storage apparatuses located in the area.

In detail, when two or more product storage apparatuses 30, in each of which the paid product is capable of being stored, are present, the first processor 130 may provide the user terminal 20 with a list of the two or more product storage apparatuses. Here, the product storage apparatuses in the list may be determined based on the pickup schedule and the receivable place of the product set from the user terminal 20.

In addition, the first processor 130 may provide the user terminal 20 with detailed information about the number of remaining storage boxes of each product storage apparatus corresponding to the list, and sizes of the remaining storage boxes (S607).

Moreover, the first processor 130 may allow the specific product storage apparatus 31, which is selected from the list by the user terminal 20, to store the paid product (S608).

Before the predetermined schedule, the first processor 130 may transmit, to the user terminal 20, the receipt acknowledgement message based on the pickup schedule (S609).

For example, when the first processor 130 receives a request for a receipt delay in response to the receipt acknowledgement message from the user terminal 20, the first processor 130 may change the pickup schedule of the product.

For another example, when the first processor 130 is requested to change a pickup location in response to the receipt acknowledgment message by the user terminal 20, the first processor 130 may receive a new pickup location from the user terminal 20.

In this case, the first processor 130 may generate and provide the list of the product storage apparatuses based on the new pickup location.

Besides, under control of the first processor 130, the paid product may be stored in the specific product storage apparatus 31 selected from the list generated based on the new pickup location received by the user terminal 20.

The first processor 130 may determine whether a user is eligible for a tax refund, based on the user's passport information. When the user is eligible for a tax refund, the first processor 130 may calculate the tax refund amount for the product (S610).

In more detail, the first processor 130 may determine whether the user is eligible for a tax refund, based on a user's passport information in conjunction with the immigration control server 42 and the inland tax management server 43. When the user is eligible for a tax refund, the first processor 130 may calculate the tax refund amount for the product.

When passport information, which is received from the product storage apparatus 30 through the first communication unit 110 after being entered by a user, matches pre-stored passport information, the first processor 130 may allow the specific product storage apparatus 31 to open the locked door such that the product is capable of being received (S611).

In more detail, the first processor 130 may further provide authentication information to the user terminal 20 through the application.

Afterward, when the user's passport information matches the pre-stored passport information, and the authentication information, which is entered by the user and which is received from the specific product storage apparatus 31 through the first communication unit 110, matches predetermined authentication information, the first processor 130 may allow the specific product storage apparatus 31 to open the locked door.

Alternatively, when the user's passport information matches the pre-stored passport information, the authentication information entered by the user matches the predetermined authentication information, and the user's biometric information received in real time from the biometric recognition module 323 of the specific product storage apparatus 31 through the first communication unit 110 matches predetermined biometric information, the first processor 130 may allow the specific product storage apparatus 31 to open the locked door.

The first processor 130 may pay the tax refund amount for the product, which is received by the user, to the user's account (S612).

Moreover, the first processor 130 may display, on the user terminal, delivery tracking information about the product and payment processing information of the tax refund amount in real time through the application.

Here, the delivery tracking information may include date-specific location information about a delivery tracking process in which the product is moved to the product storage apparatus.

Moreover, the payment information may include at least one of a tax refund amount, a scheduled payment date, and a payment currency type.

FIG. 6 illustrates that operation S601 to operation S612 are performed sequentially. However, this is merely illustrative of the technical idea of the inventive concept. Those skilled in the art to which an embodiment of the inventive concept belongs may apply various modifications and variations by changing and performing the order illustrated in FIG. 6 or performing one or more of operation S601 to operation S612 in parallel without departing from the essential characteristics of an embodiment of the inventive concept. The embodiment in FIG. 6 is not limited to a time-series order.

The method according to an embodiment of the inventive concept may be implemented by a program (or an application) and may be stored in a medium such that the program is executed in combination with a computer being hardware. Herein, the computer may be the server 10 described above.

The above-described program may include a code encoded by using a computer language such as C, C++, JAVA, a machine language, or the like, which a processor (CPU) of the computer may read through the device interface of the computer, such that the computer reads the program and performs the methods implemented with the program. The code may include a functional code related to a function that defines necessary functions executing the method, and the functions may include an execution procedure related control code necessary for the processor of the computer to execute the functions in its procedures. Furthermore, the code may further include a memory reference related code on which location (address) of an internal or external memory of the computer should be referenced by the media or additional information necessary for the processor of the computer to execute the functions. Further, when the processor of the computer is required to perform communication with another computer or a server in a remote site to allow the processor of the computer to execute the functions, the code may further include a communication related code on how the processor of the computer executes communication with another computer or the server or which information or medium should be transmitted/received during communication by using a communication module of the computer.

The steps of a method or algorithm described in connection with the embodiments of the inventive concept may be embodied directly in hardware, in a software module executed by hardware, or in a combination thereof. The software module may reside on a Random Access Memory (RAM), a Read Only Memory (ROM), an Erasable Programmable ROM (EPROM), an Electrically Erasable Programmable ROM (EEPROM), a Flash memory, a hard disk, a removable disk, a CD-ROM, or a computer readable recording medium in any form known in the art to which the inventive concept pertains.

Although embodiments of the inventive concept have been described herein with reference to accompanying drawings, it should be understood by those skilled in the art that the inventive concept may be embodied in other specific forms without departing from the spirit or essential features thereof. Therefore, the above-described embodiments are exemplary in all aspects, and should be construed not to be restrictive.

## Claims

1. A server for providing a tax refund service for an online purchased product, the server comprising:
a communication unit configured to communicate with a user terminal and an external payment server; and
a processor configured to:
when a purchase of a product in an online shopping mall linked to the tax refund service is requested from the user terminal, make a payment for the product in conjunction with the external payment server through the communication unit;
when the payment is completed, provide the user terminal with location information of a product storage apparatus where a paid product is to be delivered and stored;
when passport information received from the product storage apparatus through the communication unit matches pre-stored passport information, allow the product storage apparatus to open a locked door such that the product is capable of being received; and
pay, to an account of a user, a tax refund amount for the product received by the user.

2. The server of claim 1, wherein the processor is configured to:
when the product storage apparatus configured to store the paid product includes a plurality of product storage apparatuses, provide the user terminal with a list of the plurality of product storage apparatuses; and
control the user terminal such that the paid product is stored in a specific product storage apparatus selected from the list.

3. The server of claim 2, wherein the product storage apparatuses in the list is determined based on a pickup schedule and a receivable place of the product set from the user terminal.

4. The server of claim 3, wherein the processor is configured to:
transmit, to the user terminal, a receipt acknowledgement message including exchange rate information on a day of pickup based on the pickup schedule; and
when receiving a request for a receipt delay in response to the receipt acknowledgement message from the user terminal, change the pickup schedule of the product.

5. The server of claim 4, wherein the processor is configured to:
transmit, to the user terminal, the receipt acknowledgement message based on the pickup schedule before a predetermined schedule;
when receiving a request for a pickup location change in response to the receipt acknowledgment message from the user terminal, receive a new pickup location from the user terminal; and
generate and provide the list of the product storage apparatuses based on the new pickup location.

6. The server of claim 1, wherein the processor is configured to:
determine whether the user is eligible for a tax refund, based on passport information of the user in conjunction with an immigration control server and an inland tax management server; and
when the user is eligible for the tax refund, calculate the tax refund amount for the product.

7. The server of claim 1, wherein the processor is configured to:
further provide authentication information to the user terminal; and
when passport information of the user matches the pre-stored passport information, and authentication information, which is received from the product storage apparatus through the communication unit, matches pre-stored authentication information, allow the product storage apparatus to open the locked door.

8. The server of claim 7, wherein the processor is configured to:
when the passport information of the user matches the pre-stored passport information, the authentication information matches the pre-stored authentication information, and biometric information of the user, which is received in real time from a biometric recognition module of the product storage apparatus through the communication unit, matches predetermined biometric information, allow the product storage apparatus to open the locked door.

9. The server of claim 1, wherein the processor is configured to:
display, on the user terminal, delivery tracking information of the product and payment processing information of the tax refund amount in real time,
wherein the delivery tracking information includes date-specific location information about a delivery tracking process in which the product is moved to the product storage apparatus, and
wherein the payment information includes at least one of the tax refund amount, a scheduled payment date, and a payment currency type.

10. A computer program for executing a method for executing a tax refund service for an online purchased product, the computer program for executing the method comprising:
when a purchase of a product in an online shopping mall linked to the tax refund service is requested from a user terminal, making a payment for the product in conjunction with an external payment server;
when the payment is completed, providing the user terminal with location information of a product storage apparatus where a paid product is to be delivered and stored;
when passport information received from the product storage apparatus matches pre-stored passport information, allowing the product storage apparatus to open a locked door such that the product is capable of being received; and
paying, to an account of a user, a tax refund amount for the product received by the user.

11. A product storage apparatus for providing a tax refund service for an online purchased product, the product storage apparatus comprising:
at least one storage box;
a communication unit configured to communicate with a server configured to provide the tax refund service; and
a processor,
wherein the processor is configured to:
when receiving an open request for a specific storage box among the at least one storage box from the server as a user is completely authenticated for the tax refund service by the server, open a door of the specific storage box thus requested, and
wherein the specific storage box is selected such that a product is stored based on a size of the product purchased by the user.

12. The product storage apparatus of claim 11, wherein the processor is configured to:
transmit storage status information to the server through the communication unit,
wherein the storage status information includes location information of a usage storage box, in which a product is currently stored, from among the at least one storage box, information about the number of the storage box, information about a period remaining until a pickup schedule of a product stored in the usage storage box, location information of remaining storage boxes, in each of which a product is not currently stored, information about the number of the remaining storage boxes, and size information of each of the remaining storage boxes, and
wherein the information about the period remaining until the pickup schedule of the product stored in the usage storage box is used for the server to manage a product that is not exported even after a predetermined pickup schedule.

13. The product storage apparatus of claim 11, wherein, when a product storage apparatus capable of storing the product includes a plurality of product storage apparatuses, a list of the plurality of product storage apparatuses is provided to a terminal of the user by the server,
wherein the plurality of product storage apparatuses are determined based on a pickup schedule and a receivable place of the product set by the terminal of the user,
wherein the plurality of product storage apparatuses includes all product storage apparatuses installed within a specific area corresponding to the receivable place among a plurality of predetermined areas,
wherein, when the pickup schedule is changed, a period remaining until a pickup schedule of the product is extended based on the changed pickup schedule while a location where the product is stored is maintained as it is, and
wherein, when the receivable place is changed, the product storage apparatus capable of storing the product is determined again based on the changed receivable place while the period remaining until the pickup schedule of the product is maintained.

14. The product storage apparatus of claim 11, further comprising:
an input unit configured to receive information for authentication from the user,
wherein the information for the authentication includes passport information of the user, authentication information, which is generated by the server and which is assigned to the user, and biometric information of the user, and
wherein the authentication of the user is completed when passport information pre-stored in the server matches the passport information entered by the user through the input unit, authentication information pre-stored in the server matches the authentication information entered by the user through the input unit, and biometric information pre-stored in the server matches the biometric information entered by the user through the input unit.

15. The product storage apparatus of claim 11, wherein the product is sold at an online shopping mall linked to the tax refund service.
